# EUROPÄISCHE PATENTSCHRIFT

(11) **EP 3 145 750 B1**
(45) Veröffentlichungstag und Bekanntmachung des Hinweises auf die Patenterteilung: **12.05.2021**
(21) Anmeldenummer: 15711678.1
(22) Anmeldetag: 11.03.2015
(51) Int. Cl.: B60L 15/02, B60L 15/20, B60L 3/00, B60L 7/00

(54) **VERFAHREN ZUM SCHALTEN EINES WECHSELRICHTERS EINES ELEKTRISCHEN ANTRIEBS EINES KRAFTFAHRZEUGS UND ENTSPRECHEND SCHALTBARER WECHSELRICHTER**
METHOD FOR SWITCHING AN INVERTER OF AN ELECTRIC DRIVE OF A MOTOR VEHICLE AND A CORRESPONDINGLY SWITCHABLE INVERTER
PROCÉDÉ DE COMMUTATION D'UN ONDULEUR D'UN ENTRAÎNEMENT ÉLECTRIQUE D'UN VÉHICULE AUTOMOBILE ET ONDULEUR POUVANT ÊTRE COMMUTÉ DE MANIÈRE CORRESPONDANTE

(30) Priorität: 23.05.2014 DE 102014209887
(43) Veröffentlichungstag der Anmeldung: 29.03.2017
(73) Patentinhaber: Volkswagen Aktiengesellschaft, 38440 Wolfsburg (DE)
(72) Erfinder: ARENZ, Andrea, 38458 Velpke (DE); REINHARDT, Jan, 38442 Wolfsburg (DE)
(86) Internationale Anmeldenummer: PCT/EP2015/055070
(87) Internationale Veröffentlichungsnummer: WO 2015/176838

(56) Entgegenhaltungen:
- DE-A1-102011 086 079
- DE-A1-102013 213 044
- US-A- 5 914 582

## Beschreibung

Die Erfindung betrifft ein Verfahren zum Schalten eines Wechselrichters eines elektrischen Antriebs eines Kraftfahrzeugs und einen entsprechend schaltbaren Wechselrichter eines elektrischen Antriebs eines Kraftfahrzeugs.

Elektro-, Hybrid- und Pluginfahrzeuge weisen einen elektrischen Antrieb auf, der mit Hilfe eines Wechselrichters mit Wechselspannung versorgt wird. Als elektrischer Antrieb wird häufig eine permanenterregte elektrische Maschine eingesetzt. Unter bestimmten Bedingungen kann es notwendig sein, den Wechselrichter so zu betreiben, dass kein oder nur ein sehr geringes Drehmoment auf eine Antriebswelle des elektrischen Antriebs ausgeübt wird, um dadurch einen sicheren Zustand des elektrischen Antriebs und des gesamten Fahrzeugs zu gewährleisten. Dies kann durch Schalten in den Freilauf oder in den aktiven Kurzschluss, die beide ungetaktete Betriebsmodi des Wechselrichters sind, erreicht werden.

Der Wechselrichter enthält zum Erzeugen einer dreiphasigen Wechselspannung typischerweise sechs Schalteinrichtungen, wobei jeweils zwei Schalteinrichtungen eine Halbbrücke bilden. Im Freilauf sind alle Schalteinrichtungen des Wechselrichters sperrend geschaltet, während im aktiven Kurzschluss die erste oder die zweite Schalteinrichtung jeder Halbbrücke sperrend geschaltet ist und die zweite oder die erste Schalteinrichtung jeder Halbbrücke geöffnet ist, um Phasenanschlüsse des elektrischen Antriebs kurzzuschließen.

In manchen Betriebssituationen des Wechselrichter, die bestimmte Fahrsituationen des Fahrzeugs zur Folge haben, können beim Umschalten von einem Betriebsmodus des Wechselrichters in den Freilauf transiente Spannungsüberhöhungen in einem Hochvolt-Zwischenkreis auftreten. Beim Umschalten von einem getakteten Betriebsmodus des Wechselrichters in den aktiven Kurzschluss können in manchen Betriebssituationen transiente Phasenüberströme auftreten.

Das Dokument DE 10 2011 086 079 A1 betrifft ein Verfahren zum Umschalten eines Wechselrichters, welcher eine elektrische Maschine, insbesondere in einem Kraftfahrzeug, ansteuert, wobei die Umschaltung zwischen einem getakteten, einem Kurzschluss- oder einem Freilauf-Betriebsmodus abhängig von den auftretenden Phasenströmen und Referenzwerten durchgeführt wird.

Weiterhin beschreibt die Schrift DE 10 2013 213 044 A1 ein Verfahren zur Ansteuerung eines Frequenzumrichters zur Ansteuerung einer Elektromaschine, welche als Traktionsantrieb geeignet ist, wobei in einem Störfall, abhängig von den auftretenden Phasenströmen und/oder der Rotorlage, entweder in einen Freilauf- oder einen Kurzschluss-Betriebsmodus geschaltet wird.

Darüber hinaus beschreibt die Schrift US 5914582 A ein Verfahren zum Umschalten eines Frequenzumrichters in den Kurzschluss-Betriebsmodus mittels eines Anpassungsvorgangs mit einer für die Kompensation eines auftretenden Phasenstroms notwendigen Zeitdauer.

Aufgabe der vorliegenden Erfindung ist es, ein Verfahren zum Schalten eines Wechselrichters eines elektrischen Antriebs eines Kraftfahrzeugs und einen Wechselrichter bereitzustellen, der die oben genannten Nachteile wenigstens teilweise überwindet.

Diese Aufgabe wird durch das erfindungsgemäße Verfahren nach Anspruch 1 und den Wechselrichter nach Anspruch 10 gelöst.

Gemäß einem Aspekt betrifft die vorliegende Erfindung ein Verfahren zum Schalten eines Wechselrichters eines elektrischen Antriebs eines Kraftfahrzeugs, wobei der Wechselrichter wenigstens einen Freilauf-Betriebsmodus, einen Kurzschluss-Betriebsmodus und einen getakteten Betriebsmodus, in dem eine Umwandlung von einer Gleichspannung in eine Wechselspannung oder umgekehrt erfolgt, aufweist, wobei das Verfahren zum Schalten des Wechselrichters von einem aktuellen Betriebsmodus in einen Zielbetriebsmodus, der sich von dem aktuellen Betriebsmodus unterscheidet, umfasst;
Ermitteln eines Spannungswerts und/oder eines Stromwerts für den aktuellen Betriebsmodus; Durchführen eines Anpassungsvorgangs in Abhängigkeit von dem ermittelten Spannungswert und/oder von dem ermittelten Stromwert, um die Spannung und/oder den Strom für den Zielbetriebsmodus anzupassen; und
Schalten in den Zielbetriebsmodus.

Gemäß einem weiteren Aspekt betrifft die vorliegende Erfindung einen Wechselrichter mit einer Steuerung, die dazu eingerichtet ist, ein Verfahren nach dem vorherigen Aspekt durchzuführen. Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erfindungsgemäßes Verfahren zum Schalten eines Wechselrichters eines elektrischen Antriebs eines Kraftfahrzeugs, beispielsweise eines Elektro-, Hybrid- oder Pluginfahrzeugs, basiert auf einem Wechselrichter, der wenigstens einen Freilauf-Betriebsmodus, in dem sich der Wechselrichter im Freilauf befindet, einen Kurzschluss-Betriebsmodus, in dem sich der Wechselrichter im aktiven Kurzschluss befindet, und einen getakteten Betriebsmodus, in dem eine Umwandlung von einer Gleichspannung in eine Wechselspannung oder von einer Wechselspannung in eine Gleichspannung erfolgt, aufweist. Der Wechselrichter kann beispielsweise eine Steuerung aufweisen oder mit einer Steuerung verbunden sein, die dazu eingerichtet ist, auf Schaltmuster für die jeweiligen Betriebsmodi zuzugreifen, um den Wechselrichter in den jeweiligen Betriebsmodus zu versetzen, z.B. zu schalten und im getakteten Betriebsmodus takten.

Gemäß dem erfindungsgemäßen Verfahren zum Schalten des Wechselrichters soll von einem aktuellen Betriebsmodus in einen Zielbetriebsmodus, der sich von dem aktuellen Betriebsmodus unterscheidet, geschaltet werden. Dazu werden ein Spannungswert und/oder ein Stromwert für den aktuellen Betriebsmodus ermittelt. Der Spannungswert und/oder der Stromwert können mit Hilfe einer Spannungssteuerung bzw. eines Stromreglers des Wechselrichters zugänglich sein und/oder mit Hilfe von Messeinrichtungen bestimmt werden, die beispielsweise im Wechselrichter angeordnet sind. Alternativ können der Spannungswert und/oder der Stromwert auch abgeschätzt werden, beispielsweise mittels eines Modells zum Abschätzen des Spannungswerts und/oder des Stromwertes. Der Spannungswert und/oder der Stromwert können beispielsweise eine Phasenspannung bzw. einen Phasenstrom an einem Phasenanschluss des Wechselrichters repräsentieren oder auch in manchen Situationen eine Phasenspannung bzw. einen Phasenstrom an einem Anschluss, über den der Wechselrichter mit dem elektrischen Antrieb verbunden ist.

Nachdem der Spannungswert und/oder der Stromwert ermittelt sind, wird ein Anpassungsvorgang in Abhängigkeit von dem ermittelten Spannungswert und/oder von dem ermittelten Stromwert durchgeführt, um die Spannung und/oder den Strom für den Zielbetriebsmodus anzupassen. Während des Anpassungsvorgangs kann sich der Wechselrichter im getakteten Betrieb befinden, d.h. Schalteinrichtungen des Wechselrichters können gemäß einer geeigneten Taktung geöffnet und geschlossen werden. Beim Anpassen der Spannung und/oder des Stroms kann beispielsweise eine Spannungsdifferenz und/oder eine Stromdifferenz zwischen dem aktuellen Betriebszustand und dem Zielbetriebszustand minimiert oder sogar beseitigt werden.

Nachdem die Spannung und/oder der Strom an den Zielbetriebsmodus angepasst sind, wird in den Zielbetriebsmodus geschaltet. Da die Spannung bzw. der Strom an eine Spannung bzw. einen Strom im Zielbetriebsmodus angepasst ist, ist die Wahrscheinlichkeit, dass es zu einer Spannungsüberhöhung bzw. einem Überstrom kommt, bei manchen Ausführungsbeispielen reduziert.

Der Zielbetriebsmodus kann ein ungetakteter Betriebsmodus, beispielsweise der Freilauf-Betriebsmodus oder der Kurzschluss-Betriebsmodus sein. Das erfindungsgemäße Verfahren zum Schalten des Wechselrichters kann also beim Schalten in einen ungetakteten Betriebsmodus, beispielsweise in den Freilauf-Betriebsmodus und/oder in den Kurzschluss-Betriebsmodus, Anwendung finden.

Der Freilauf-Betriebsmodus kann derart definiert sein, dass im Freilauf-Betriebsmodus kein Phasenstrom fließt bzw. ein Phasenstrom von Null Ampere vorhanden ist. Bei manchen Ausführungsbeispielen ist der Phasenstrom zumindest an einem Ausgang, an dem der elektrische Antrieb angeschlossen sein kann, null Ampere. Dies kann erreicht werden, indem alle Schalteinrichtungen des Wechselrichters sperrend geschaltet werden.

Der Kurzschluss-Betriebsmodus kann derart definiert sein, dass in diesem eine Phasenspannung von Null Volt vorliegt. Bei manchen Ausführungsbeispielen ist die Phasenspannung zumindest an einem Ausgang, an den der elektrische Antrieb angeschlossen sein kann, null Volt. Dies kann erreicht werden, indem jeweils eine bestimmte Schalteinrichtung aller Halbbrücken des Wechselrichters sperrend geschaltet werden, während die übrigen Schalteinrichtungen der jeweiligen Halbbrücken in einen geöffneten Zustand versetzt sind. Beispielsweise können "obere" Schalteinrichtungen aller Halbbrücken sperrend geschaltet sein, während "untere" Schalteinrichtungen geöffnet sind oder umgekehrt.

Der aktuelle Betriebsmodus kann ein ungetakteter Betriebsmodus, beispielsweise der Freilauf-Betriebsmodus oder der Kurzschluss-Betriebsmodus, oder ein getakteter Betriebsmodus sein. Der aktuelle Betriebsmodus kann ein getakteter Betriebsmodus sein, in dem eine Phasenspannung und/oder ein Phasenstrom vorliegen.

Das erfindungsgemäße Schaltverfahren kann beim Schalten des Wechselrichters von dem getakteten Betriebsmodus in den Freilauf-Betriebsmodus zum Einsatz kommen. Beim Schalten von dem getakteten Betriebsmodus in den Freilauf-Betriebsmodus kann der Stromwert für den getakteten Betriebsmodus ermittelt werden. Das Ermitteln des Stromwertes kann durch Abschätzen oder Berechnen aus aktuellen Statusbedingungen des Wechselrichters, beispielsweise indem auf Daten des Stromreglers zurückgegriffen wird, und/oder durch Messen des Stroms erfolgen. Der Anpassungsvorgang kann in Abhängigkeit von dem ermittelten Stromwert durchgeführt werden, um den Strom für den Freilauf-Betriebsmodus anzupassen. Das Ermitteln des Stromwertes und der Anpassungsvorgang können mittels eines Stromreglers erfolgen. Der Stromregler kann dazu so eingestellt werden, dass er auf einen Sollstrom, beispielsweise null Ampere, regelt. Ausgehend von dem Endzustand des Anpassungsvorgangs kann in den Freilauf-Betriebsmodus geschaltet werden.

Alternativ oder zusätzlich kann das erfindungsgemäße Schaltverfahren beim Schalten des Wechselrichters von dem Kurzschluss-Betriebsmodus in den Freilauf-Betriebsmodus verwendet werden. Dabei kann der Stromwert für den Kurzschluss-Betriebsmodus ermittelt werden. Wie im voranstehenden Absatz erwähnt, kann das Ermitteln des Stromsollwertes auf einer Abschätzung oder Berechnung des Stromwertes auf Basis beispielsweise der Stromregelungsinformationen und/oder auf einer Messung beruhen. Der Anpassungsvorgang kann in Abhängigkeit von dem ermittelten Stromwert durchgeführt werden, um den Strom für den Freilauf-Betriebsmodus anzupassen. Das Ermitteln des Stromwertes und der Anpassungsvorgang können wiederum mittels des Stromreglers erfolgen, der dazu so eingestellt werden kann, dass er auf einen Sollstrom, beispielsweise null Ampere, regelt. Nach dem Anpassungsvorgang kann in den Freilauf-Betriebsmodus geschaltet werden.

Alternativ oder zusätzlich kann das erfindungsgemäße Schaltverfahren auch beim Schalten des Wechselrichters von dem getakteten Betriebsmodus in den Kurzschluss-Betriebsmodus eingesetzt werden. Dazu kann der Spannungswert für den getakteten Betriebsmodus ermittelt werden. Das Ermitteln des Spannungswertes kann durch Abschätzen oder Berechnen aus aktuellen Statusbedingungen des Wechselrichters, beispielsweise indem auf Daten der Spannungssteuerung zurückgegriffen wird, und/oder durch Messen der Spannung erfolgen. Der Anpassungsvorgang kann in Abhängigkeit von dem ermittelten Spanungswert durchgeführt werden, um die Spannung für den Kurzschluss-Betriebsmodus anzupassen. Nach Durchführung des Anpassungsvorgangs kann in den Kurzschluss-Betriebsmodus geschaltet werden.

Alternativ oder zusätzlich kann das erfindungsgemäße Schaltverfahren beim Schalten des Wechselrichters von dem Freilauf-Betriebsmodus in den Kurzschluss-Betriebsmodus zur Anwendung kommen. Um den Spannungswert für den Freilauf-Betriebsmodus zu ermitteln, kann ein Stromregler des Wechselrichters mit einer Stromsollwertvorgabe von Null Ampere betrieben werden. Durch entsprechendes Betreiben des Stromreglers kann sich ein Zwischenzustand einstellen. Der Spannungswert in diesem Zwischenzustand kann durch Abschätzen oder Berechnen aus aktuellen Statusbedingungen des Wechselrichters, beispielsweise indem auf Daten der Spannungssteuerung zurückgegriffen wird, und/oder durch Messen ermittelt werden und dient als ermittelter Spannungswert für den Anpassungsvorgang. Alternativ kann der Spannungswert mittels eines Modells ausgehend von dem Kurzschlussmodus abgeschätzt werden oder auf andere Weise bestimmt werden. Der Anpassungsvorgang kann in Abhängigkeit von dem ermittelten Spanungswert durchgeführt werden, um die Spannung für den Kurzschluss-Betriebsmodus anzupassen. Ausgehend von der angepassten Spannung kann in den Kurzschluss-Betriebsmodus geschaltet werden.

Das Anpassen der Spannung und/oder des Stroms kann eine Änderung der Spannung und/oder des Stroms bzw. eine Minimierung eines Betrags der Spannung und/oder des Betrags des Stroms enthalten. Beispielsweise kann während der Anpassung eine Phasenspannung im Bereich von 0V bis ±10 V und/oder ein Phasenstrom im Bereich von 0A bis 5A eingestellt werden. Bei manchen Ausführungsbeispielen bedeutet das Anpassen der Phasenspannung und/oder des Phasenstroms eine Einstellung einer Spannung von ca. 0 V bzw. eines Stroms von ca. 0A.

Die Anpassung der Spannung und/oder des Stroms für den Zielbetriebsmodus während des Anpassungsvorgangs kann einer Funktion folgen. Die Funktion kann beispielsweise eine lineare Funktion, eine Exponentialfunktion, oder eine Polynomfunktion sein. Alternativ oder zusätzlich kann die Funktion eine Stufenfunktion sein. Die Anpassung kann zum Beispiel entlang einer sich kontinuierlich bzw. linear verändernden Stufenfunktion, beispielsweise entlang einer kontinuierlich steigenden oder fallenden Stufenfunktion, erfolgen, wobei beispielsweise bei jeder Stufe, die eine Dauer von 1 ms hat, der Strom und/oder die Spannung um einen vorgegebenen Wert, z.B. 10 A oder 10 V, erhöht oder erniedrigt wird.

Der Anpassungsvorgang kann eine Zeitdauer im Bereich von 1 ms bis 100 ms aufweisen. Bei manchen Ausführungsbeispielen ist die Zeitdauer des Anpassungsvorgangs auf 2 ms bis 20 ms reduziert. Zum Beispiel kann das Anpassen der Spannung und/oder des Stroms insgesamt ca. 10 ms andauern. Für jeden Umschaltvorgang, wie vom getakteten Betriebsmodus in den Freilauf-Betriebsmodus oder in den Kurzschluss-Betriebsmodus oder vom Kurzschluss-Betriebsmodus in den Freilauf-Betriebsmodus oder umgekehrt, kann eine charakteristische Zeitdauer für den Anpassungsvorgang bestimmt sein, z.B. 10 ms.

Das Ermitteln des Spannungswertes und/oder des Stromwertes durch Abschätzen und/oder Berechnen und/oder durch Messen kann schnell erfolgen. Beispielsweise können der Spannungswert und/oder der Stromwert schneller abgeschätzt, berechnet und/oder gemessen werden, als der Anpassungsvorgang durchgeführt wird. Auch das Schalten in den ZielBetriebsmodus kann schnell, z.B. schneller als das Durchführen des Anpassungsvorgangs, durchgeführt werden. Die Zeitspanne zum Durchführen des Schaltverfahrens kann damit im Millisekundenbereich liegen, so dass der sichere Zustand schnell eingestellt wird.

Beim Schalten von dem Freilauf-Betriebszustand in den Kurzschluss-Betriebszustand kann der Stromregler über eine Zeitdauer von 1 ms bis 100 ms mit einer Stromsollwertvorgabe von Null Ampere betrieben werden. Bei manchen Ausführungsbeispielen ist die Dauer auf 1 ms bis 20ms reduziert. Zum Beispiel kann der Stromregler für ca. 10 ms mit einer Stromsollwertvorgabe von Null Ampere betrieben werden. Die Zeitdauer, während der der Stromregler entsprechend betrieben wird, kann für jeden Umschaltvorgang konstant sein. Die Zeitspanne zum Durchführen des Schaltverfahrens kann sich somit entsprechend verlängern.

Das erfindungsgemäße Schaltverfahren kann als Softwareprodukt implementiert sein, das einen Prozessor veranlasst, das Verfahren auszuführen.

Die vorliegende Erfindung betrifft weiterhin einen Wechselrichter eines elektrischen Antriebs eines Kraftfahrzeugs. Der Wechselrichter weist wenigstens einen Freilauf-Betriebsmodus, in dem sich der Wechselrichter in Freilauf befindet, einen Kurzschluss-Betriebsmodus, in dem sich der Wechselrichter im aktiven Kurzschluss befindet, und einen getakteten Betriebsmodus, in dem eine Umwandlung von einer Gleichspannung in eine Wechselspannung oder von einer Wechselspannung in eine Gleichspannung erfolgt, wie oben beschrieben auf und enthält eine Steuerung, die dazu eingerichtet ist, das beschriebene Schaltverfahren durchzuführen. Die Steuerung kann dazu eingerichtet sein, auf Schaltmuster für die jeweiligen Betriebsmodi zuzugreifen, um den Wechselrichter in den jeweiligen Betriebsmodus zu versetzen bzw. entsprechend zu schalten. Die Steuerung kann elektronische Bauteile aufweisen, wie einen Mikroprozessor, einen Datenspeicher und dergleichen. Zudem kann die Steuereinheit eine Software aufweisen, durch die das erfindungsgemäße Schaltverfahren implementiert ist, so dass der Mikroprozessor das Schaltverfahren ausführt.

Der Wechselrichter kann weiterhin eine Schaltung aufweisen, die mehrere, beispielsweise sechs, Schalteinrichtungen, beispielsweise IGBTs, enthält. Die Schalteinrichtungen können eine Vollbrückenschaltung bilden.

Die vorliegende Erfindung betrifft auch ein Kraftfahrzeug mit einem Wechselrichter, wie er oben beschrieben wurde. Das Kraftfahrzeug kann ein Elektro-, Hybrid- oder Pluginfahrzeug sein. Das Kraftfahrzeug kann weiterhin einen elektrischen Antrieb aufweisen. In dem getakteten Betriebsmodus des Wechselrichters kann der elektrische Antrieb ein Drehmoment auf die Antriebswelle des Kraftfahrzeugs ausüben, so dass sich der elektrische Antrieb in einem Fahrbetrieb befindet. Nach dem Anpassungsvorgang kann ein Arbeitspunkt des elektrischen Antriebs vorliegen, der dem Zielbetriebsmodus, beispielsweise dem Freilauf-Betriebsmodus oder dem Kurzschluss-Betriebsmodus, ähnlich ist. Der Arbeitspunkt des elektrischen Antriebs kann als Kombination aus einem komplexen Raumzeiger des Phasenstroms und einem komplexen Raumzeiger der Phasenspannung der Elektromaschine definiert sein.

Zudem kann das Kraftfahrzeug einen Zwischenstromkreis, eine Traktionsbatterie, eine Fahrzeugsteuerung und/oder dergleichen enthalten.

Ausführungsbeispiele der Erfindung werden nun beispielhaft und unter Bezugnahme auf die beigefügte Zeichnung beschrieben, in der:
Fig. 1 schematisch ein Flussdiagramm eines Ausführungsbeispiels eines Verfahrens zum Schalten eines Wechselrichters zeigt;
Fig. 2 schematisch eine Schaltung eines Wechselrichters darstellt; und
Fig. 3 schematisch einen Überblick über Betriebsmodi eines Wechselrichters und Übergänge zwischen den Betriebsmodi darstellt.

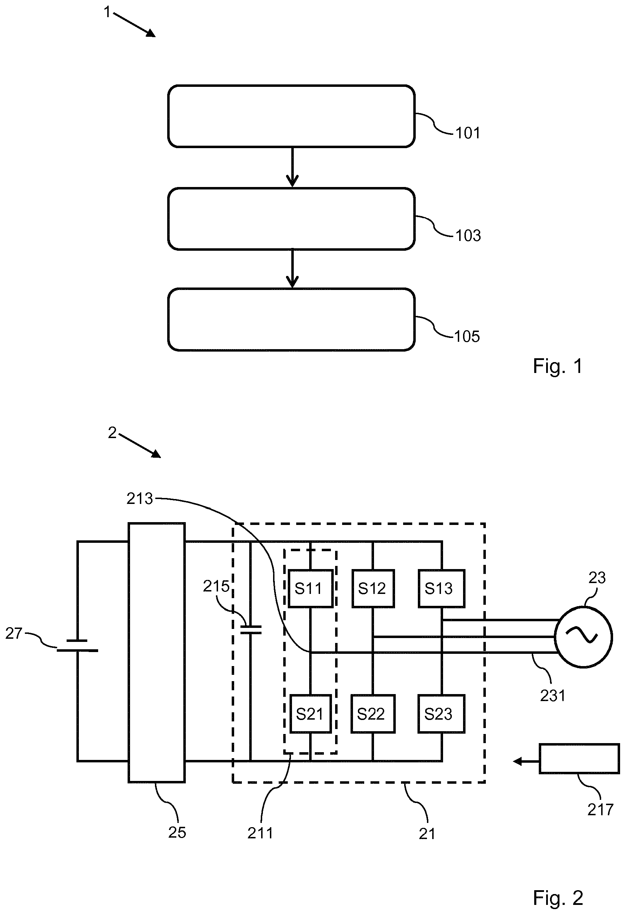

Ein Ausführungsbeispiel eines Verfahrens 1 zum Schalten eines Wechselrichters eines elektrischen Antriebs eines Kraftfahrzeugs ist in Fig. 1 schematisch als Flussdiagramm dargestellt.

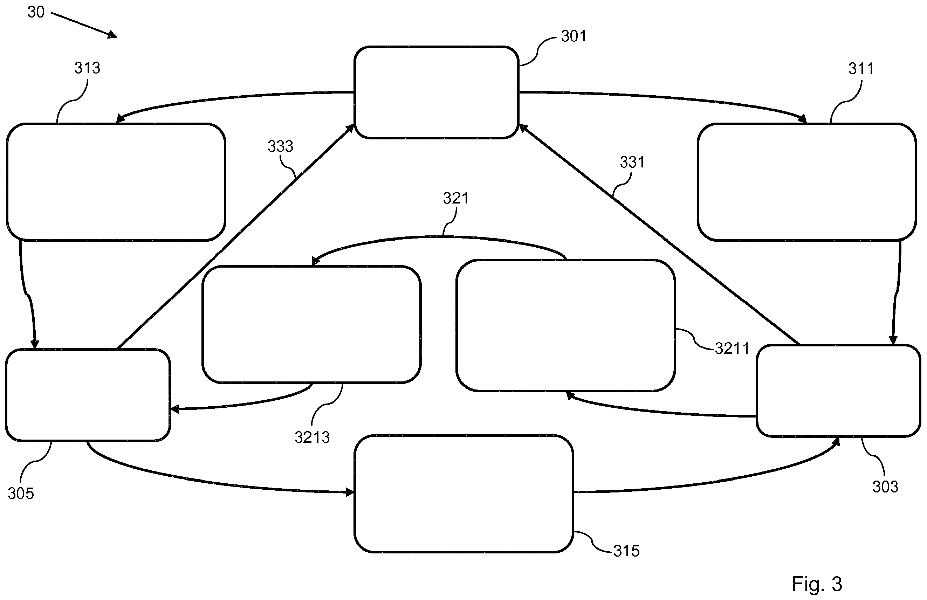

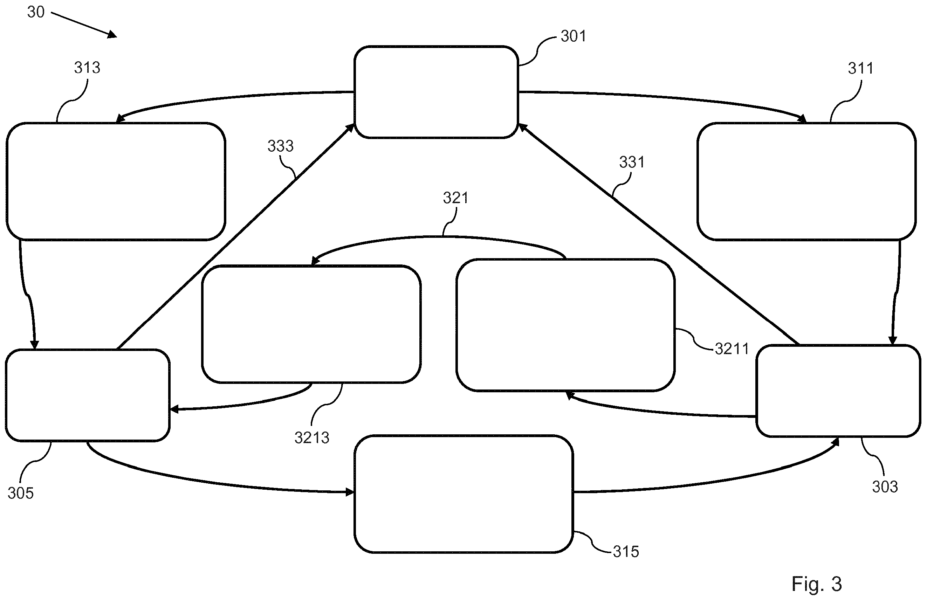

Das Verfahren 1 ist dazu ausgelegt, auf Grundlage eines Wechselrichter, der wenigstens einen Freilauf-Betriebsmodus, einen Kurzschluss-Betriebsmodus und einen getakteten Betriebsmodus, in dem eine Umwandlung von einer Gleichspannung in eine Wechselspannung oder umgekehrt erfolgt, aufweist, ausgeführt zu werden. Ein beispielhafter Wechselrichter 21, der dazu ausgelegt ist, das Verfahren auszuführen, wird mit Bezug auf Fig. 2 beschrieben. Gemäß dem Verfahren 1 zum Schalten des Wechselrichters ist vorgesehen, einen Betriebsmodus des Wechselrichters von einem aktuellen Betriebsmodus in einen Zielbetriebsmodus, der sich von dem aktuellen Betriebsmodus unterscheidet, zu schalten. Beispiele für Betriebsmodi, die als aktueller Betriebsmodus in Frage kommen, werden mit Bezug auf Fig. 3 weiter unten im Detail beschrieben.

Gemäß dem Verfahren 1 zum Schalten des Wechselrichters wird ein Spannungswert und/oder ein Stromwert für den aktuellen Betriebsmodus ermittelt 101. Dazu werden bei den meisten Übergängen aus aktuellen Statusvorgaben des Wechselrichters der Spannungswert und/oder der Stromwert abgeschätzt. Lediglich beim Schalten vom Freilauf-Modus in den Kurzschlussmodus wird ein Stromregler des Wechselrichters mit einer Stromsollwertvorgabe von Null Ampere betrieben, um anschließend aus aktuellen Statusvorgaben des Wechselrichters den Spannungswert und/oder den Stromwert abzuschätzen.

In Abhängigkeit von dem ermittelten Spannungswert und/oder von dem ermittelten Stromwert wird bei 103 ein Anpassungsvorgang durchgeführt, um die Spannung und/oder den Strom für den Zielbetriebsmodus anzupassen. Ausgehend von der angepassten Spannung und/oder von dem angepassten Strom wird bei 105 in den Zielbetriebsmodus geschaltet.

Fig. 2 zeigt schematisch eine Anordnung 2 zum Betreiben eines elektrischen Antriebs 23 mit Hilfe eines Wechselrichters 21. Die Anordnung umfasst weiterhin einen Zwischenkreis 25, über den der Wechselrichter 21 mit einer Hochvoltbatterie 27 des Fahrzeugs verbunden ist.

Der Wechselrichter 21 enthält sechs Schalteinrichtungen S11, S12, S13, S21, S22, S23, die als IGBTs ausgebildet sein können. Die Schalteinrichtungen S11, S12, S13, S21, S22, S23 sind paarweise als Halbbrücke 211 geschaltet und ein Mittelabgriff 213 jedes Schalteinrichtungspaares bzw. jeder Halbbrücke 211 sind mit einem Phasenanschluss 231 des elektrischen Antriebs 23 verbunden, wobei Fig. 2 zur Vereinfachung nur eine Halbbrücke 211 zeigt. Der Wechselrichter 21 enthält weiterhin einen Kondensator 215, der parallel zu den parallel geschalteten Halbbrücken 211 geschaltet ist.

Außerdem enthält der Wechselrichter 21 eine Steuerung 217, die einen Mikroprozessor aufweist, der dazu eingerichtet ist, die Schalteinrichtungen S11, S12, S13, S21, S22, S23 anzusteuern und zu schalten, so dass der Wechselrichter 21 in einem getakteten Betriebsmodus, dem Freilauf-Betriebsmodus oder dem Kurzschluss-Betriebsmodus arbeiten kann. Im getakteten Betriebsmodus werden die Schalteinrichtungen S11, S21 der Halbbrücken 211 so geschaltet, dass dreiphasiger Wechselstrom erzeugt wird. Im Freilauf-Betriebsmodus sind alle Schalteinrichtungen S11, S12, S13, S21, S22, S23 des Wechselrichters 21 sperrend geschaltet. Im Kurzschluss-Betriebsmodus dagegen sind die oberen Schalteinrichtungen S11 jeder Halbbrücke 211 sperrend geschaltet und die unteren Schalteinrichtungen 21 jeder Halbbrücke 211 sind geöffnet, um Phasenanschlüsse 231 des elektrischen Antriebs 23 kurzzuschließen.

Fig. 3 stellt schematisch einen Überblick 30 über Betriebsmodi eines Wechselrichters, z.B. des Wechselrichters 21 aus Fig. 2, und Übergänge zwischen den Betriebsmodi dar.

Fig. 3 zeigt einen getakteten Betriebsmodus 301, den Freilauf-Betriebsmodus 303 und den Kurzschluss-Betriebsmodus 305. Im getakteten Betriebsmodus 301 liegt an dem elektrischen Antrieb eine Spannung U ≥ 0 V und ein Strom I ≥ 0 A an. Im Freilauf-Betriebsmodus 303 ist ein Strom von 0A eingeprägt, während für die Spannung U > 0 V gilt. Im Kurzschluss-Betriebsmodus 305 ist eine Spannung von 0 V eingeprägt, während für den Strom I > 0 A gilt. Außer im Freilauf-Betriebsmodus 303 sind die Spannungswerte und Stromwerte durch eine Spannungssteuerung bzw. durch eine Stromregelung des Wechselrichters 21 definierbar. Im Freilauf-Betriebsmodus 303 lässt sich die Spannung nicht direkt ermitteln.

Fig. 3 zeigt weiterhin eine Reihe von Übergängen 311, 313, 315, 321, 331, 333 zwischen dem getakteten Betriebsmodus 301, dem Freilauf-Betriebsmodus 303 und dem Kurzschluss-Betriebsmodus 305. Die Übergänge 311, 313, 315 erfolgen auf Basis des in Fig. 1 gezeigten Verfahrens 1, wobei die Spannungswerte bzw. die Stromwerte direkt mit Hilfe einer Spannungssteuerung bzw. einer Stromregelung des Wechselrichters 21 ermittelt werden. Der Übergang 321 erfolgt ebenfalls auf Basis der Verfahrens 1, wobei mit Hilfe eines zusätzlichen Stromregelungsschrittes 3211 ein Spannungswert bestimmt wird. Die Übergänge 331, 333 können direkt eingestellt werden, ohne dass ein Anpassungsvorgang durchgeführt wird, da bei diesen Übergängen 331, 333 keine Überströme oder Spannungserhöhungen zu befürchten sind.

Beim Übergang 311 von dem getakteten Betriebsmodus 301 in den Freilauf-Betriebsmodus 303 werden ein Spannungswert und ein Stromwert ermittelt. In Abhängigkeit von dem ermittelten Stromwert wird der Strom angepasst, wobei der Strom innerhalb von ca. 10 ms stufenweise auf ca. 0 A geregelt wird, beispielsweise gesenkt wird. Anschließend wird die Taktung des Wechselrichters 21 mit Schalten in dem Freilauf-Betriebsmodus, d.h. durch Sperren aller Schalteinrichtungen S11, S12, S13, S21, S22, S23 beendet.

Beim Übergang 313 von dem getakteten Betriebsmodus 301 in den Kurzschluss-Betriebsmodus 305 werden ein Spannungswert und ein Stromwert ermittelt. In Abhängigkeit von dem Spannungswert wird die Spannung angepasst, wobei die Spannung innerhalb von ca. 10 ms stufenweise auf ca. 0V gesteuert wird, beispielsweise gesenkt wird. Anschließend wird die Taktung des Wechselrichters 21 mit Schalten in dem Kurzschluss-Betriebsmodus, d.h. durch Sperren der oberen Schalteinrichtungen S11, S12, S13 und durch Öffnen der unteren Schalteinrichtungen S21, S22, S23 oder umgekehrt, beendet.

Beim Übergang 315 von dem Kurzschluss-Betriebsmodus 305 in den Freilauf-Betriebsmodus 303 werden ein Spannungswert und ein Stromwert ermittelt. In Abhängigkeit von dem Stromwert wird der Strom angepasst, wobei der Strom innerhalb von ca. 10 ms stufenweise auf ca. 0 A durch Takten des Wechselrichters geregelt wird, beispielsweise gesenkt wird. Anschließend wird die Taktung des Wechselrichters 21 mit Schalten in dem Freilauf-Betriebsmodus, d.h. durch Sperren aller Schalteinrichtungen, beendet.

Beim Übergang 313 vom Freilauf-Betriebsmodus 301 in den Kurzschluss-Betriebsmodus 305 wird zunächst ein Stromreglers des Wechselrichters 21 für eine Zeit von ca. 10 ms mit einer Stromsollwertvorgabe von 0 A betrieben 3211 und während dieser Zeit der Spannungswert und der Stromwert ermittelt. In Abhängigkeit von dem so ermittelten Spannungswert wird die Spannung angepasst, wobei die Spannung innerhalb von ca. 10 ms stufenweise auf ca. 0V gesteuert wird, beispielsweise gesenkt wird 3213. Anschließend wird die Taktung des Wechselrichters 21 mit Schalten in dem Kurzschluss-Betriebsmodus, d.h. durch Sperren der oberen Schalteinrichtungen S11, S12, S13 und durch Öffnen der unteren Schalteinrichtungen, S21, S22, S23 oder umgekehrt, beendet 3213.

Dadurch, dass vor dem Schalten in den Freilauf-Betriebsmodus bzw. in den Kurzschluss-Betriebsmodus die Spannung bzw. der Strom gezielt gesteuert bzw. geregelt werden, können Spannungsdifferenzen bzw. Stromdifferenzen zwischen dem aktuellen Betriebsmodus und dem Zielbetriebsmodus ausgeglichen werden und transiente Überströme bzw. Überspannungen reduziert oder sogar vollständig verhindert werden.

### Bezugszeichenliste

- 1: Verfahren zum Schalten eines Wechselrichters
- 101: Ermitteln von Spannungswert und/oder Stromwert
- 103: Anpassen von Spannung und/oder Strom
- 105: Schalten in einen Zielbetriebsmodus
- 2: Anordnung
- 21: Wechselrichter
- 23: elektrischer Antrieb
- 25: Zwischenkreis
- 27: Hochvoltbatterie
- 211: Halbbrücke
- 213: Mittelabgriff
- 215: Kondensator
- 217: Steuerung
- 231: Phasenanschluss
- S11, S13,:
- S15: obere Schalteinrichtungen
- S21, S23,:
- S25: untere Schalteinrichtungen
- 30: Überblick Betriebsmodi
- 301: getakteter Betriebsmodus
- 303: Freilauf-Betriebsmodus
- 305: Kurzschluss-Betriebsmodus
- 311: Übergang: getakteter Betriebsmodus in Freilauf-Betriebsmodus
- 313: Übergang: getakteter Betriebsmodus in Kurzschluss-Betriebsmodus
- 315: Übergang: Kurzschluss-Betriebsmodus in Freilauf-Betriebsmodus
- 321: Übergang: Freilauf-Betriebsmodus in Kurzschluss-Betriebsmodus
- 331, 333: geregelte Übergänge
- 3211: Stromregelung und Bestimmung der Spannung
- 3213: Anpassen der Spannung und Schalten in Kurzschluss-Betriebsmodus

## Patentansprüche

1. Verfahren (1) zum Schalten eines Wechselrichters eines elektrischen Antriebs eines Kraftfahrzeugs, wobei der Wechselrichter wenigstens einen Freilauf-Betriebsmodus (303), einen Kurzschluss-Betriebsmodus (305) und einen getakteten Betriebsmodus (301), in dem eine Umwandlung von einer Gleichspannung in eine Wechselspannung oder umgekehrt erfolgt, aufweist, wobei das Verfahren (1) zum Schalten des Wechselrichters von einem aktuellen Betriebsmodus in einen Zielbetriebsmodus, der sich von dem aktuellen Betriebsmodus unterscheidet, umfasst; Ermitteln (101) eines Spannungswerts und/oder eines Stromwerts für den aktuellen Betriebsmodus; Durchführen (103) eines Anpassungsvorgangs in Abhängigkeit von dem ermittelten Spannungswert und/oder von dem ermittelten Stromwert, um die Spannung und/oder den Strom für den Zielbetriebsmodus anzupassen; und Schalten (105) in den Zielbetriebsmodus; **dadurch gekennzeichnet, dass** für jeden Anpassungsvorgang eine charakteristische Zeitdauer bestimmt ist.

2. Verfahren (1) nach dem vorhergehenden Anspruch, wobei der Zielbetriebsmodus der Freilauf-Betriebsmodus (303) oder der Kurzschluss-Betriebsmodus (305) ist.

3. Verfahren (1) nach einem der vorhergehenden Ansprüche, wobei eine Phasenspannung in dem Kurzschluss-Betriebsmodus (305) Null Volt beträgt und/oder ein Phasenstrom in dem Freilauf-Betriebsmodus (303) Null Ampere beträgt.

4. Verfahren (1) nach einem der vorhergehenden Ansprüche, wobei das Schalten (311, 315) des Wechselrichters von dem getakteten Betriebsmodus (301) oder von dem Kurzschluss-Betriebsmodus (305) in den Freilauf-Betriebsmodus (303) umfasst:
Ermitteln (101) des Stromwerts für den getakteten Betriebsmodus (301) oder für den Kurzschluss-Betriebsmodus (305);
Durchführen (103) des Anpassungsvorgangs in Abhängigkeit von dem ermittelten Stromwert, um den Strom für den Freilauf-Betriebsmodus (303) anzupassen; und
Schalten (105) in den Freilauf-Betriebsmodus (303).

5. Verfahren (1) nach einem der vorhergehenden Ansprüche, wobei das Schalten (313, 321) des Wechselrichters von dem getakteten Betriebsmodus (301) oder von dem Freilauf-Betriebsmodus (303) in den Kurzschluss-Betriebsmodus (305) umfasst:
Ermitteln (101) des Spannungswerts für den getakteten Betriebsmodus (301) oder für den Freilauf-Betriebsmodus (303);
Durchführen (103) des Anpassungsvorgangs in Abhängigkeit von dem ermittelten Spannungswert, um die Spannung für den Kurzschluss-Betriebsmodus (305) anzupassen; und
Schalten (105) in den Kurzschluss-Betriebsmodus (305).

6. Verfahren (1) nach dem vorhergehenden Anspruch, wobei das Ermitteln (101) des Spannungswerts für den Freilauf-Betriebsmodus (303) umfasst:
Betreiben (3211) eines Stromreglers des Wechselrichters mit einer Stromsollwertvorgabe von Null Ampere.

7. Verfahren (1) nach einem der vorhergehenden Ansprüche, wobei die Anpassung (103) der Spannung und/oder des Stroms für den Zielbetriebsmodus während des Anpassungsvorgangs einer Funktion, insbesondere einer linearen Funktion und/oder einer Stufenfunktion, folgt.

8. Verfahren (1) nach einem der vorhergehenden Ansprüche, wobei eine Dauer des Anpassungsvorgangs (103) in einem Bereich von 1 ms bis 100 ms liegt, insbesondere 10ms beträgt.

9. Verfahren (1) nach einem der Ansprüche 6 bis 8, wobei der Stromregler über eine Dauer von 1 ms bis 100 ms, insbesondere von 10 ms, mit einer Stromsollwertvorgabe von Null Ampere betrieben wird (3211).

10. Wechselrichter (21) mit einer Steuerung (217), die dazu eingerichtet ist, ein Verfahren (10) nach einem der vorhergehenden Ansprüche durchzuführen.

## Claims

1. Method (1) for switching an inverter of an electric drive of a motor vehicle, wherein the inverter has at least one freewheeling operating mode (303), a short-circuit operating mode (305) and a clocked operating mode (301), in which a conversion from a direct voltage into an alternating voltage or vice versa takes place, wherein the method (1) comprises switching the inverter from a current operating mode to a target operating mode different from the current operating mode;
determining (101) a voltage value and/or a current value for the current operating mode;
executing (103) an adaptation operation as a function of the determined voltage value and/or the determined current value in order to adapt the voltage and/or current for the target operating mode; and switching (105) to the target operating mode;
**characterized in that** a characteristic time period is determined for each adaptation operation.

2. Method (1) according to the preceding claim, wherein the target operating mode is the freewheeling operating mode (303) or the short-circuit operating mode (305).

3. Method (1) according to any of the preceding claims, wherein a phase voltage in the short-circuit operating mode (305) is zero volts and/or a phase current in the freewheeling operating mode (303) is zero amperes.

4. Method (1) according to any of the preceding claims, wherein the switching (311, 315) of the inverter from the clocked operating mode (301) or from the short-circuit operating mode (305) to the freewheeling operating mode (303) comprises:
determining (101) the current value for the clocked operating mode (301) or for the short-circuit operating mode (305);
executing (103) the adaptation operation in dependence on the determined current value in order to adapt the current for the freewheeling operating mode (303); and
switching (105) to the freewheeling operating mode (303).

5. Method (1) according to any of the preceding claims, wherein the switching (313, 321) of the inverter from the clocked operating mode (301) or from the freewheeling operating mode (303) to the short-circuit operating mode (305) comprises:
determining (101) the voltage value for the clocked operating mode (301) or for the freewheeling operating mode (303);
executing (103) the adaptation operation in dependence on the determined voltage value in order to adapt the voltage for the short-circuit operating mode (305); and
switching (105) to the short-circuit operating mode (305).

6. Method (1) according to the preceding claim, wherein determining (101) the voltage value for the freewheeling operating mode (303) comprises:
operating (3211) a current regulator of the inverter with a current setpoint entry of zero amperes.

7. Method (1) according to any of the preceding claims, wherein the adaptation (103) of the voltage and/or of the current for the target operating mode during the adaptation operation of a function, especially a linear function and/or a step function, follows.

8. Method (1) according to any of the preceding claims, wherein a duration of the adaptation operation (103) is in a range from 1 ms to 100 ms, especially 10 ms.

9. Method (1) according to any of the claims 6 to 8, wherein the current regulator is operated (3211) for a duration of 1 ms to 100 ms, especially 10 ms, with a current setpoint value entry of zero amperes.

10. Inverter (21) having a control (217), which is configured to carry out a method (10) according to any of the preceding claims.

## Revendications

1. Procédé (1) de commutation d'un onduleur d'un entraînement électrique d'un véhicule automobile, l'onduleur présentant au moins un mode de fonctionnement en roue libre (303), un mode de fonctionnement en court-circuit (305) et un mode de fonctionnement cadencé (301), dans lequel une conversion d'une tension continue en une tension alternative ou inversement se produit, le procédé (1) pour commuter l'onduleur d'un mode de fonctionnement en cours dans un mode de fonctionnement cible, qui se distingue du mode de fonctionnement en cours, comprenant ;
la détermination (101) d'une valeur de tension et/ou d'une valeur de courant pour le mode de fonctionnement en cours ;
la réalisation (103) d'un processus d'adaptation en fonction de la valeur de tension déterminée et/ou de la valeur de courant déterminée, pour adapter la tension et/ou le courant pour le mode de fonctionnement cible ; et la commutation (105) dans le mode de fonctionnement cible ;
**caractérisé en ce qu'**une durée caractéristique est déterminée pour chaque processus d'adaptation.

2. Procédé (1) selon la revendication précédente, le mode de fonctionnement cible étant le mode de fonctionnement en roue libre (303) ou le mode de fonctionnement en court-circuit (305).

3. Procédé (1) selon l'une quelconque des revendications précédentes, une tension de phase dans le mode de fonctionnement en court-circuit (305) étant de zéro volt et/ou un courant de phase dans le mode de fonctionnement en roue libre (303) étant de zéro ampère.

4. Procédé (1) selon l'une quelconque des revendications précédentes, la commutation (311, 315) de l'onduleur du mode de fonctionnement cadencé (301) ou du mode de fonctionnement en court-circuit (305) dans le mode de fonctionnement en roue libre (303) comprenant :
la détermination (101) de la valeur de courant pour le mode de fonctionnement cadencé (301) ou pour le mode de fonctionnement en court-circuit (305) ;
la réalisation (103) du processus d'adaptation en fonction de la valeur de courant déterminée pour adapter le courant pour le mode de fonctionnement en roue libre (303) ; et
la commutation (105) dans le mode de fonctionnement en roue libre (303).

5. Procédé (1) selon l'une quelconque des revendications précédentes, la commutation (313, 321) de l'onduleur du mode de fonctionnement cadencé (301) ou du mode de fonctionnement en roue libre (303) dans le mode de fonctionnement en court-circuit (305) comprenant :
la détermination (101) de la valeur de tension pour le mode de fonctionnement cadencé (301) ou pour le mode de fonctionnement en roue libre (303) ;
la réalisation (103) du processus d'adaptation en fonction de la valeur de tension déterminée pour adapter la tension pour le mode de fonctionnement en court-circuit (305) ; et
la commutation (105) dans le mode de fonctionnement en court-circuit (305).

6. Procédé (1) selon la revendication précédente, la détermination (101) de la valeur de tension pour le mode de fonctionnement en roue libre (303) comprenant :
le fonctionnement (3211) d'un régulateur de courant de l'onduleur à une spécification de valeur de consigne de courant de zéro ampère.

7. Procédé (1) selon l'une quelconque des revendications précédentes, l'adaptation (103) de la tension et/ou du courant pour le mode de fonctionnement cible pendant le processus d'adaptation suivant une fonction, en particulier une fonction linéaire et/ou une fonction en échelon.

8. Procédé (1) selon l'une quelconque des revendications précédentes, une durée du processus d'adaptation (103) se situant dans une plage de 1 ms à 100 ms, en particulier à 10 ms.

9. Procédé (1) selon l'une quelconque des revendications 6 à 8, le régulateur de courant étant utilisé (3211) sur une durée de 1 ms à 100 ms, en particulier de 10 ms, à une spécification de valeur de consigne de courant de zéro ampère.

10. Onduleur (21) pourvu d'une commande (217) conçue pour réaliser un procédé (10) selon l'une quelconque des revendications précédentes.
